# EUROPEAN PATENT SPECIFICATION

(11) **EP 1 424 692 B1**
(45) Date of publication and mention of the grant of the patent: **05.01.2011**
(21) Application number: 03257518.5
(22) Date of filing: 28.11.2003
(51) Int. Cl.: G11B 7/26

(54) **Method of producing an optical recording medium**
Verfahren zur Herstellung einem optischen Aufzeichnungsmediums
Procédé de fabrication d'un support d'enregistrement optique

(30) Priority: 28.11.2002 JP 2002345542; 05.12.2002 JP 2002353467
(43) Date of publication of application: 02.06.2004
(73) Proprietor: FUJIFILM Corporation, Minato-ku Tokyo (JP)
(72) Inventor: Shibata, Michihiro, c/o Fuji Photo Film Co., Ltd., Odaware-shi Kanagawa (JP)
(74) Representative: Stevens, Jason Paul

(56) References cited:
- EP-A- 0 718 048
- EP-A2- 0 356 140
- JP-A- 6 004 910

## Description

### BACKGROUND OF THE INVENTION

### Field of the Invention

The present invention relates to a method for producing an optical recording medium using a dye in the recording layer.

### Description of the Related Art

Optical recording media (optical discs) on which information can be recorded only once by use of laser light have hitherto been known. These optical discs are also called write-once CD (so-called CD-R) or DVD-R, and typically have a structure where a recording layer comprising an organic dye, a light reflective layer comprising metal such as gold and a resin protective layer are layered, in this order, on a transparent disc-shaped substrate. Information is recorded on a CD-R or the like by irradiating the CD-R or the like with near-infrared laser light (usually laser light having a wavelength around 780 nm). Specifically, a portion of the recording layer that is irradiated absorbs light, whereby the temperature rises at the irradiated portion. The rise in temperature causes a physical or chemical change (e.g., formation of pits) to alter the optical properties of the irradiated portion, whereby information is recorded. On the other hand, reading (playback) of the information is usually carried out by irradiating the CD-R or the like with laser light having the same wavelength as the laser light for recording and detecting the difference in reflectance between the region of the recording layer where the optical properties have been changed (recorded region) and a region of the recording layer where the optical properties have not been changed (non-recorded region).

In the production of such a CD-R, the formation of a recording layer is conducted by coating a dye solution to a substrate while rotating the substrate, for example, by spin coating. With respect to the formation of the recording layer, various proposals have been made for improving the performance of the recording layer. For example, Japanese Patent Application Laid-Open (JP-A) No. 2000-155994 discloses a method in which increasing the rotation speed of a substrate when coating a dye solution to an inner periphery side of the substrate enables the dye to be applied well even at a small amount of supply. JP-A No. 8-31026 discloses a method carried out under the conditions in that the surface tension of a dye solution, which is indicated by X, the rotation speed of a substrate during coating of the dye solution, which is indicated by Y, and the viscosity of the dye solution, which is indicated by Z, satisfy: X ≥ 20 dyne/cm; 60 rpm ≥ Y ≥ 40 rpm; and 1000 rpm·mPa·s ≥ YZ ≥ 400 rpm·mPa·s.

However, such conventional methods may result in a large difference in recording characteristics between the inner periphery side and the outer periphery side of a dye recording layer depending upon the concentration of a coating solution or the temperature or humidity during coating. In particular, when a coating solution has a low concentration, the resulting layer may be thinner at the inner periphery side and, therefore, the inner periphery portion and the outer periphery portion tend to differ in recording characteristics.

Moreover, it was found that thickness unevenness having a radial shape from the inner periphery portion toward the outer periphery portion occurs at a low rotation speed around 200 rpm. Such thickness unevenness may problematically generate a noise in reflection signals in the outer periphery side. The above-mentioned thickness unevenness will appear noticeably when the concentration of the dye solution is low.

EP 0356140 discloses a method for producing an optical recording medium in which a dye solution is coated on a substrate by a spin coating method to form a dye recording layer, wherein the substrate is rotated at a rotation speed of 500 rpm during the period of supply of the dye solution. The dye solution is then dried to form a dye recording layer.

JP 6-4910 is concerned with a method of applying liquid photoresist to a disc, and discloses various rotation speeds which can be applied to the disc.

### SUMMARY OF THE INVENTION

The present invention was made in view of the foregoing problems.

An object of the invention, at least in its preferred forms, is to provide a method for producing an optical recording medium by which method an optical recording medium can be produced that is of low noise level and that has favourable recording properties and favourable playback properties.

According to the invention, there is provided a method for producing an optical recording medium comprising the steps of: supplying a dye solution; and coating the dye solution on a substrate by a spin coating method to form a dye recording layer, wherein the substrate is rotated at a rotation speed of 400 rpm or higher during a period from the beginning of supply of the dye solution to the end of supply of the dye solution; and drying the dye solution to form a dye recording layer, **characterized in that** the method has, in a sequence from the beginning of the supply of the dye solution to the completion of the drying, a low-speed rotation step of rotating the substrate at a speed lower than a speed at the beginning of the supply of the dye solution or than a speed at the end of the supply of the dye solution.

Preferably, a dye is contained in the dye solution in an amount of 0.2 to 1.2% by mass.

Preferably, the low-speed rotation step starts immediately after the end of the supply of the dye solution.

More preferably, a dye is contained in the dye solution in an amount of 0.6% to 0.8% by mass.

Preferably, the rotation speed of the substrate in the low-speed rotation step is from 20 to 400 rpm lower than the speed at the beginning of the supply.

Preferably, the duration of the low-speed rotation step is 1 to 15 seconds.

In a preferred form, the rotation speed of the substrate is increased to a speed of 2000 to 2500 rpm after the end of the low-speed rotation step.

Certain preferred embodiments of the invention will now be described by way of example and with reference to the accompanying drawings, in which:-
Fig. 1A is a graph that shows the coating sequence in Example 4 from the beginning of the supply of the dye solution to the end of the drying;
Fig. 1B is a graph that shows the distribution of optical density of the dye recording layer of Example 4 in its radial direction;
Fig. 2A is a graph that shows the coating sequence in Comparative Example 5 from the beginning of the supply of the dye solution to the end of the drying;
Fig. 2B is a graph that shows the distribution of optical density of the dye recording layer of Comparative Example 5 in its radial direction;
Fig. 3A is a graph that shows the coating sequence in Comparative Example 6 from the beginning of the supply of the dye solution to the end of the drying; and
Fig. 3B is a graph that shows the distribution of optical density of the dye recording layer of Comparative Example 6 in its radial direction.

### DETAILED DESCRIPTION OF THE INVENTION

A method for producing an optical recording medium of the present invention will be described below.

The method for producing an optical recording medium of the invention involves two significant features, which will be described separately. As the first feature, the method for producing an optical recording medium comprises the steps of supplying a dye solution and coating the dye solution on a substrate by spin coating to form a dye recording layer, and is characterized in that the substrate is rotated at a rotation speed of 400 rpm or higher during a period from the beginning to the end of the supply of the dye solution.

As the second feature, the method for producing an optical recording medium comprises the steps of supplying a dye solution, coating the dye solution on a substrate by spin coating and drying the dye solution to form a dye recording layer, and is characterized by having, in a sequence from the beginning of the supply of the dye solution to the completion of the drying, a step of rotating the substrate at a speed lower than the speed at the beginning of the supply of the dye solution or than the speed at the end of the supply.

At first, optical recording media which are obtained by the methods for producing an optical recording medium will be explained.

The optical recording media include a substrate and at least a dye recording layer on the substrate and other layers as required. Examples of the optical recording media include write-once optical recording media such as CD-R and DVD-R. The substrate and the layers will be explained below.

### [Optical Recording Medium]

### <Substrate>

For the substrate, any of various materials may be selected from those used for the conventional optical recording media.

Specific examples of such materials include glass; polycarbonate; acrylic resin such as polymethyl methacrylate; vinyl chloride resin such as polyvinyl chloride and vinyl chloride copolymer; epoxy resin; amorphous polyolefin; polyester; and metal such as aluminium. These materials may be used in combination, if desired.

Among these materials, in consideration of moisture resistance, dimensional stability and inexpensiveness, polycarbonate and amorphous polyolefin are preferable, and polycarbonate is particularly preferable. The substrate preferably has a thickness of 0.5 to 1.4 mm.

The substrate is provided with guide grooves for tracking or irregularities (pregrooves) representing information such as address signals.

In the case of DVD-R, the track pitch of the pregrooves is preferably set in the range of 300 to 900 nm, more preferably from 350 to 850 nm, and still more preferably from 400 to 800 nm.

The depth of the pregrooves (groove depth) is preferably set in the range of 100 to 160 nm, more preferably from 120 to 150 nm, and still more preferably from 130 to 140 nm.

Furthermore, the half-value width of the pregrooves is preferably set in the range of 200 to 400 nm, more preferably from 230 to 380 nm, and still more preferably from 250 to 350 nm.

In the case of CD-R, the track pitch of the pregrooves is preferably set in the range of 1.2 to 2.0 µm, more preferably from 1.4 to 1.8 µm, and still more preferably from 1.55 to 1.65 µm.

The depth of the pregrooves (groove depth) is preferably set in the range of 100 to 250 nm, more preferably from 150 to 230 nm, and still more preferably from 170 to 210 nm.

The half-value width of the pregrooves is preferably set in the range of 400 to 650 nm, more preferably from 480 to 600 nm, and still more preferably from 500 to 580 nm.

The track pitches and depths of pregrooves mentioned above are those used in the cases of CD-R and DVD-R. However, the invention is not limited to CD-R or DVD-R. Substrates characterized by values out of the ranges mentioned above may also be employed.

An undercoat layer may be formed on the substrate surface on a side where a dye recording layer is formed, for the purposes of improving the flatness, enhancing the adhesive strength and preventing the dye recording layer from deterioration. Examples of the material for the undercoat layer include polymer substances such as polymethyl methacrylate, acrylic acid-methacrylic acid copolymer, styrene-maleic anhydride copolymer, polyvinyl alcohol, N-methylolacrylamide, styrene-vinyltoluene copolymer, chlorosulfonated polyethylene, nitrocellulose, polyvinyl chloride, chlorinated polyolefin, polyester, polyimide, vinyl acetate-vinyl chloride copolymer, ethylene-vinyl acetate copolymer, polyethylene, polypropylene and polycarbonate; and surface modifiers such as silane coupling agents. The undercoat layer can be formed on the substrate, for example, by dissolving or dispersing the above-mentioned material in an appropriate solvent to prepare a coating liquid, and applying the coating liquid to a surface of the substrate using coating methods such as spin coating, dip coating and extrusion coating. The thickness of the undercoat layer is generally in the range of 0.005 to 20 µm, preferably from 0.01 to 10 µm.

### <Dye Recording Layer>

The dye used in the dye recording layer is not particularly limited. Examples thereof include cyanine dyes, phthalocyanine dyes, imidazoquinoxaline dyes, pyrylium dyes, thiopyrylium dyes, azulenium dyes, squarilium dyes, metal (e.g., Ni and Cr) complex salt dyes, naphthoquinone dyes, anthraquinone dyes, indophenol dyes, indoaniline dyes, triphenylmethane dyes, merocyanin dyes, oxonol dyes, aluminum dyes, diimmonium dyes, and nitroso compounds. Of these dyes, cyanine dyes, phthalocyanine dyes, azulenium dyes, squarilium dyes, oxonol dyes and imidazoquinoxaline dyes are preferable.

The dye recording layer may be single-layered or multi-layered. The thickness of the dye recording layer is generally in the range of 20 to 500 nm, preferably from 30 to 300 nm, and more preferably from 50 to 200 nm.

### <Reflective Layer>

A reflective layer is, if necessary, formed on the dye recording layer for the purpose of improving the reflectance in the playback of information. A light-reflecting material which is used for forming the reflective layer is a material having a high reflectance with respect to laser beam. Examples thereof include metal such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn and Bi, semimetal and stainless steel. Of these materials, Cr, Ni, Pt, Cu, Ag, Au, Al and stainless steel are preferable. These materials may be used singly or in combination. Moreover, these may be used in the form of alloy. Particularly preferred is Au, Ag or an alloy thereof. The thickness of the reflective layer is generally in the range of 10 to 800 nm, preferably from 20 to 500 nm, and still more preferably from 50 to 300 nm.

### <Protective Layer>

It is preferable to form a protective layer on the reflective layer or the recording layer for the purpose of physically and chemically protecting the recording layer and the like. It is not necessary to form a protective layer when two substrates are laminated with the recording layers thereof arranged inside, for example, in a case of the production of a DVD-R type optical recording medium. As a material of the protective layer, inorganic materials such as SiO₂, MgF₂, SnO₂ and Si₃N₄ and organic materials such as thermoplastic resin, thermosetting resin and UV curable resin may be used. The thickness of the protective layer is generally in the range of 0.1 to 100 µm.

Between the reflective layer and the recording layer, a light-transmitting layer for improving the adhesive property to the recording layer may be formed, for example, depending on the properties of the recording layer.

For the light-transmitting layer, any material may be used as long as it has a transmittance not less than 90% at the laser wavelength.

The light-transmitting layer may be formed by a conventionally known method. The thickness of that layer is preferably set in the range of 2 to 50 nm.

### [Method for Producing Optical Recording Medium]

The method for producing an optical recording medium including the first feature will be explained in detail below.

The moulding of a substrate can be carried out by injection moulding, compression moulding or injection compression moulding using the above-mentioned substrate materials. Moreover, the substrate can also be compression moulded by mounting a stamper to a moulding die of a hydraulic press machine and pressing a resin heated to around the melting point of the resin.

A dye recording layer is formed by preparing a dye solution by dissolving a recording substance, such as one of the dyes mentioned above, together with a binder or the like in a suitable solvent, applying the dye solution to a substrate surface to form a coating film, and then drying the film.

The method for producing an optical recording medium of the invention employs spin coating as a method for applying a dye solution. In the first aspect of the coating by spin coating method, the substrate is rotated at a rotation speed of 400 rpm or higher during a period from the beginning of the supply of the dye solution to the end of the supply of the dye solution. Specifically, the substrate is rotated at a rotation speed not slower than 400 rpm during a period from the beginning of the supply of the dye solution from a nozzle to the end of the supply of the dye solution. By rotating the substrate at a speed not slower than 400 rpm, it is possible to prevent thickness unevenness having a radial shape on the dye recording layer, thereby reducing noises caused by such unevenness in thickness.

The rotation speed is more preferably not slower than 420 rpm, and still more preferably not slower than 450 rpm. A rotation speed slower than 400 rpm results in the occurrence of thickness unevenness having a radial shape, which causes noises. The upper limit of the rotation speed is 1000 rpm.

As described above, in the method for producing an optical recording medium, the rotation speed of a substrate during coating a dye solution is set not slower than 400 rpm, which is faster than normal speed. By rotating a substrate at such high speed, it is possible to inhibit the occurrence of unevenness in the thickness of a coating film even using a dye solution of low dye concentration. A dye may be contained in the dye solution in an amount of 0.2 to 1.2% by mass, and preferably in an amount of 0.4 to 1.0% by mass. Use of the dye solution containing a dye in an amount of 0.5 to 0.9% by mass can more effectively inhibit the occurrence of thickness unevenness.

As the method for dissolving the recording substance and the like, methods such as an ultrasonic treatment, a homogenizer treatment, heating, etc. can be employed.

Examples of the solvent for preparing the dye solution include esters such as butyl acetate, ethyl lactate and cellosolve acetate; ketones such as methyl ethyl ketone, cyclohexanone and methyl isobutyl ketone; chlorinated hydrocarbons such as dichloromethane, 1,2-dichloroethane and chloroform; amides such as dimethylformamide; hydrocarbons such as methylcyclohexane; ethers such as tetrahydrofuran, ethyl ether and dioxane; alcohols such as ethanol, n-propanol, isopropanol, n-butanol and diacetone alcohol; fluorine-containing solvents such as 2,2,3,3-tetrafluoropropanol; and glycol ethers such as ethylene glycol monomethyl ether, ethylene glycol monoethyl ether and propylene glycol monomethyl ether.

These solvents may be used singly or in combination in view of the solubility of the recording substance to be used. Depending on purposes, the coating liquid may further contain additives such as antioxidants, UV absorbers, plasticizers, and lubricants.

For the improvement of light fastness, the dye recording layer may contain various kinds of anti-fading agents.

A singlet oxygen quencher is generally used as an anti-fading agent. Singlet oxygen quenchers described in publications such as patent specifications can be used.

Specific examples of the quenchers include those described in JP-A Nos. 58-175693, 59-81194, 60-18387, 60-19586, 60-19587, 60-35054, 60-36190, 60-36191, 60-44554, 60-44555, 60-44389, 60-44390, 60-54892, 60-47069, 63-209995, and 4-25492, Japanese Patent Application Publication (JP-B) Nos.1-38680 and 6-26028, the specification of German Patent No. 350399 and Journal of the Chemical Society of Japan, No.10 (1992), p.1141.

The amount of the anti-fading agent such as a singlet oxygen quencher to be used is normally in the range of 0.1 to 50% by mass, preferably from 0.5 to 45% by mass, more preferably from 3 to 40% by mass, and particularly preferably from 5 to 25% by mass based on the amount of the compounds used for recording.

Typical examples of anti-fading agents include nitroso compounds, metal complexes, diimmonium salt, aminium salt. Examples thereof are described, for example, in JP-A Nos. 2-300288, 3-224793 and 4-146189.

Examples of the binder include natural organic polymer substances such as gelatin, cellulose derivatives, dextran, rosin and rubber; and synthetic organic polymers including hydrocarbon resins such as polyethylene, polypropylene, polystyrene and polyisobutylene, vinyl resins such as polyvinyl chloride, polyvinylidene chloride and copolymer of polyvinyl chloride-polyvinyl acetate, acrylic resins such as polymethyl acrylate and polymethyl methacrylate, polyvinyl alcohol, chlorinated polyethylene, epoxy resin, butyral resin, rubber derivatives, and initial condensates of thermosetting resins such as phenol-formaldehyde resin. When a binder is used, the amount of the binder is generally from 0.2 to 20 parts by mass, preferably from 0.5 to 10 parts by mass, and more preferably from 1 to 5 parts by mass based on 100 parts by mass of the dye.

With respect to ambient temperature during coating, no particular problems arise when the temperature is from 20 to 40°C, and the temperature is preferably from 25 to 35°C, and more preferably from 27 to 33°C. The relative humidity during coating is from 20 to 60%RH, preferably from 30 to 50%RH, and still more preferably from 35 to 45%RH.

### <Formation of Reflective Layer>

The reflective layer can be formed by vapor depositing, sputtering or ion-plating the above-described reflective materials on the dye recording layer. In the invention, the reflective layer may be single-layered or multi-layered with two or more materials for the purpose of improving the storage stability or changing the appearance.

### <Formation of Protective Layer>

When an inorganic substance is used as a material for a protective layer, the protective layer may be formed by vacuum deposition, sputtering, coating, or the like. When an organic substance is used, the protective layer may be formed by lamination of a plastic film, coating of a coating liquid obtained by dissolving the organic substance in a solvent, or the like. Alternatively, the protective layer may be formed by laminating a film obtained by extrusion of a plastic onto the reflective layer using an adhesive between them. When a thermoplastic or thermosetting resin is used, the protective layer can also be formed by a method comprising dissolving the resin in a suitable solvent to prepare a coating liquid, applying the coating liquid and then drying it. When a UV curable resin is used, the protective layer can also be formed by a method comprising applying the UV curable resin as it is or a coating liquid prepared by dissolving the UV curable resin in a suitable solvent, and then curing it by irradiation with UV rays. Depending on purposes, various additives such as antistatic agents, antioxidants and UV absorbers may be added to these coating liquids.

In order to control viscosity, the temperature during coating is preferably in the range of 23 to 50°C, more preferably 24 to 40°C, and still more preferably 25 to 37°C.

In order to prevent disc warpage, it is preferable to use a pulse-type light irradiator (preferably a UV irradiator) for the irradiation of the coat layer with ultraviolet light. The pulse interval is preferably 1 msec or less, and more preferably 1 µsec or less. Although the amount of the light irradiated per pulse is not particularly limited, it is preferably 3 kW/cm² or less, and more preferably 2 kW/cm² or less.

Although the number of irradiation times is not particularly limited, it is preferably 20 or less, and more preferably 10 or less.

Next, the second feature of the method for producing an optical recording medium of the invention will be described in detail below.

The moulding of a substrate may be carried out in the same manner as that described above.

A dye recording layer is formed by preparing a dye solution by dissolving a recording substance, such as one of the dyes mentioned above, together with a binder or the like in a suitable solvent, applying the dye solution to a substrate surface to form a coating film, and then drying the film.

The method for producing an optical recording medium of the invention employs spin coating as a method for applying a dye solution. In the course of applying the dye solution by spin coating, the method has, in a sequence from the beginning of the supply of the dye solution to the completion of the drying, a step of rotating the substrate at a speed lower than the speed at the beginning of the supply of the dye solution or than the speed at the end of the supply of the dye solution. This step is hereinafter referred to as a "low-speed rotation step." If a high-speed rotation of the substrate is continued, a resulting layer becomes thicker toward the outer periphery side due to the action of centrifugal force. The incorporation of the low-speed rotation step can inhibit the effect of centrifugal force and can inhibit the occurrence of a difference in layer thickness between the inner periphery side and the outer periphery side. In particular, even using a dye solution of a low concentration, it is possible to inhibit the occurrence of a difference in thickness of the layer between the inner periphery side and the outer periphery side. In other words, the production method of the invention can provide an optical recording medium in which the thickness is approximately uniform over the entire optical recording layer and there is a small difference in recording characteristics between the inner periphery side and the outer periphery side. The distribution of the thickness of the dye recording layer can be limited specifically to less than ±2%.

Specifically, the rotation speed of the substrate during the low-speed rotation step is preferably from 20 to 400 rpm lower than the speed at the beginning of the supply of the dye solution, and more preferably from 100 to 300 rpm lower. The shorter the transition time to the low-speed rotation speed, the more favorable.

The low-speed rotation step is required to be included in the sequence from the beginning of the supply of the dye solution to the completion of the drying. It preferably starts immediately after the end of the supply of the dye solution. This is because undried dye solution is susceptible to centrifugal force due to its fluidity at a time immediately after the end of the supply of the dye solution. Thus, a coat layer can be formed more uniformly by starting a low-speed rotation as soon as the supply of the dye solution ends and controlling the influence of centrifugal force.

The duration of the low-speed rotation step is preferably from 1 to 15 seconds, and more preferably from 3 to 10 seconds.

After the end of the low-speed rotation step, the rotation speed is increased (for example, to 2000 to 2500 rpm). Thus, an excess dye solution which has reached the outer periphery portion of the substrate is swished off and thereby the substrate is dried.

There is no particular limitation on the concentration of the dye solution. In the invention, a coat layer of an approximately uniform thickness can be formed even if a dye solution having low concentration is used. Thus, the concentration of the dye solution can be set 1% by mass or less, and even from 0.6 to 0.8% by mass. Because a dye recording layer can be formed well even if the dye solution has a concentration as low as 1% by mass of less, the range of the concentration of a dye solution prepared during the formation of a dye recording layer can be set wider than that conventionally employed.

It is preferable to set the rotation speed of the substrate at the beginning of the supply of the dye solution to be 400 rpm or higher. By rotating the substrate at a speed not slower than 400 rpm, it is possible to prevent the occurrence of thickness unevenness having a radial shape on the dye recording layer, thereby reducing noises caused by such unevenness in thickness. The rotation speed is more preferably from 420 to 600 rpm, and still more preferably from 440 to 550 rpm. A rotation speed slower than 400 rpm results in the occurrence of thickness unevenness having a radial shape, which causes noises.

As the method for dissolving the recording substance and the like, methods such as an ultrasonic treatment, a homogenizer treatment, heating, etc. can be employed.

Examples of the solvent for preparing the dye solution include esters such as butyl acetate, ethyl lactate, and cellosolve acetate; ketones such as methyl ethyl ketone, cyclohexanone, and methyl isobutyl ketone; chlorinated hydrocarbons such as dichloromethane, 1,2-dichloroethane, and chloroform; amides such as dimethylformamide; hydrocarbons such as methylcyclohexane; ethers such as tetrahydrofuran, ethyl ether, and dioxane; alcohols such as ethanol, n-propanol, isopropanol, n-butanol, and diacetone alcohol; fluorine-containing solvents such as 2,2,3,3-tetrafluoropropanol; and glycol ethers such as ethylene glycol monomethyl ether, ethylene glycol monoethyl ether, and propylene glycol monomethyl ether.

These solvents may be used singly or in combination in view of the solubility of the recording substance to be used.

Depending on purposes, the coating liquid may further contain additives such as antioxidants, UV absorbers, plasticizers and lubricants.

For the improvement of light fastness, the dye recording layer may contain various kinds of anti-fading agents.

A singlet oxygen quencher is generally used as an anti-fading agent. Singlet oxygen quenchers described in publications such as patent specifications can be used.

Specific examples of the quenchers include those described in JP-A Nos. 58-175693, 59-81194, 60-18387, 60-19586, 60-19587, 60-35054, 60-36190, 60-36191, 60-44554, 60-44555, 60-44389, 60-44390, 60-54892, 60-47069, 63-209995, and 4-25492, JP-B Nos.1-38680 and 6-26028, the specification of German Patent No. 350399 and Journal of the Chemical Society of Japan, No.10 (1992), p.1141.

The amount of the anti-fading agent such as a singlet oxygen quencher to be used is normally in the range of 0.1 to 50% by mass, preferably from 0.5 to 45% by mass, more preferably from 3 to 40% by mass, and particularly preferably from 5 to 25% by mass based on the amount of the compounds used for recording.

Typical examples of anti-fading agents include nitroso compounds, metal complexes, diimmonium salt, aminium salt.

Examples thereof are described, for example, in JP-A Nos. 2-300288, 3-224793 and 4-146189.

Examples of the binder include natural organic polymer substances such as gelatin, cellulose derivatives, dextran, rosin and rubber; and synthetic organic polymers including hydrocarbon resins such as polyethylene, polypropylene, polystyrene and polyisobutylene, vinyl resins such as polyvinyl chloride, polyvinylidene chloride and copolymer of polyvinyl chloride-polyvinyl acetate, acrylic resins such as polymethyl acrylate and polymethyl methacrylate, polyvinyl alcohol, chlorinated polyethylene, epoxy resin, butyral resin, rubber derivatives, and initial condensates of thermosetting resins such as phenol-formaldehyde resin. When a binder is used, the amount of the binder is generally from 0.2 to 20 parts by mass, preferably from 0.5 to 10 parts by mass, and more preferably from 1 to 5 parts by mass based on 100 parts by mass of the dye.

With respect to ambient temperature during coating, no particular problems arise when the temperature is from 20 to 40°C, and the temperature is preferably from 25 to 35 °C, and more preferably from 27 to 33°C. The relative humidity during coating is from 20 to 60% RH, preferably from 30 to 50% RH, and still more preferably from 35 to 45% RH.

The reflective layer can be formed in the same manner as described above.

The protective layer can be formed in the same manner as described above.

### EXAMPLES

The present invention will be described in detail by using examples. However, the invention should not be construed to be limited thereto.

### (Examples 1 to 3, Comparative Examples 1 to 4)

A substrate of 0.6 mm in thickness and 120 mm in diameter having spiral grooves (depth: 130 nm, width: 320 nm, track pitch: 0.74 µm) was formed from a polycarbonate resin. The substrate was prepared by an injection molding machine (manufactured by Sumitomo Heavy Industries, Ltd.) with a stamper mounted thereon. At the same time, a dummy substrate having the same structure was molded.

A solution of dye A shown below in 2,2,3,3-tetrafluoropropanol (dye concentration: 0.68% by mass) was prepared as a dye solution. The dye solution was applied to the grooved surface of a substrate by spin coating method at a temperature of 30°C and a humidity of 45%RH to form a dye recording layer having a thickness of 150 nm. At that time, the rotation speed of a substrate from the beginning of the supply of the dye solution to the end of the supply was set as shown in Table 1 for each Example and Comparative Example. Subsequently, silver was sputtered on the dye recording layer to a thickness of about 150 nm to form a reflective layer. Furthermore, the reflective layer was bonded to a dummy substrate (thickness: 0.6 mm) by use of an ultraviolet ray-curable adhesive (DaiCure Clear SD-640 manufactured by Dainippon Ink and Chemicals, Inc.). Thus, the optical recording media of Examples 1 to 3 and Comparative Examples 1 to 4 were prepared.

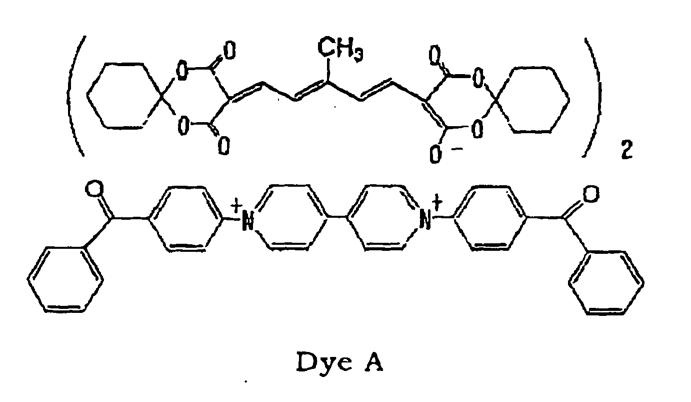

### [Evaluation]

A noise level and frequency of a reflection signal at a radius of 55 mm were measured for each of the optical recording media of Examples 1 to 3 and Comparative Examples 1 to 4 in their unrecorded condition. Specifically, each optical recording medium was rotated at a linear speed of 3.5 m/s using a disc drive (DDU1000 manufactured by Pulstec Industrial Co., Ltd.), and the noise frequency and noise level of a reflection signal were measured with a spectrum analyzer. The results are shown in Table 1.

**Table 1**

| | Rotation speed during supply of dye solution (rpm) | Noise Level at radius of 55 mm | |
|---|---|---|---|
| | | Level (dB) | Frequency (kHz) |
| Example 1 | 400 | 0.0 | - |
| Example 2 | 450 | 0.0 | - |
| Example 3 | 500 | 0.0 | - |
| Comparative example 1 | 200 | 29.7 | 16.6 |
| Comparative example 2 | 218 | 27.6 | 16.4 |
| Comparative example 3 | 300 | 16.6 | 22.2 |
| Comparative example 4 | 350 | 7.9 | 26.8 |

Table 1 shows that when the rotation speed of a substrate from the beginning of the supply of a dye solution to the end of the supply of a dye solution is higher, the noise frequency becomes higher, and the noise level is reduced.

### (Example 4 and Comparative Examples 5 and 6)

A substrate of 0.6 mm in thickness and 120 mm in diameter having spiral grooves (depth: 130 nm, width: 320 nm, track pitch: 0.74 µm) was formed from a polycarbonate resin. The substrate was prepared by an injection molding machine (manufactured by Sumitomo Heavy Industries, Ltd.) with a stamper mounted thereon. At the same time, a dummy substrate having the same structure was molded.

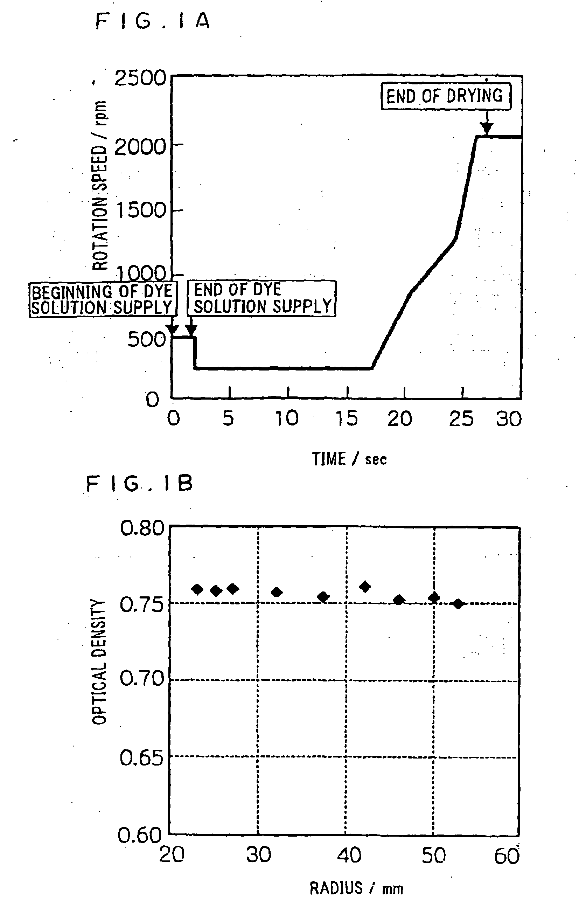

A solution of dye A shown in Example 1 in 2,2,3,3-tetrafluoropropanol (dye concentration: 0.78% by mass) was prepared as a dye solution. The dye solution was applied to the grooved surface of a substrate by spin coating method at a temperature of 30°C and a humidity of 45%RH to form a dye recording layer having a thickness of 150 nm. At that time, the coating sequence from the beginning of supply of the dye solution to the end of drying was set as shown in Figs. 1A, 2A and 3A for Example 4, Comparative Example 5 and Comparative Example 6, respectively. Figs. 1A to 3A show the change of rotation speed with respect to time, with the rotation speed of a substrate plotted along the vertical axis and the time elapsed since the beginning of supply of a dye solution plotted along the horizontal axis. Subsequently, silver was sputtered on the dye recording layer to a thickness of about 150 nm to form a reflective layer. Furthermore, the reflective layer was bonded to a dummy substrate (thickness: 0.6 mm) by use of an ultraviolet ray-curable adhesive (DaiCure Clear SD-640 manufactured by Dainippon Ink and Chemicals, Inc.). Thus, the optical recording media of Example 4 and Comparative Examples 5 and 6 were prepared.

### [Evaluation]

### (Evaluation 1)

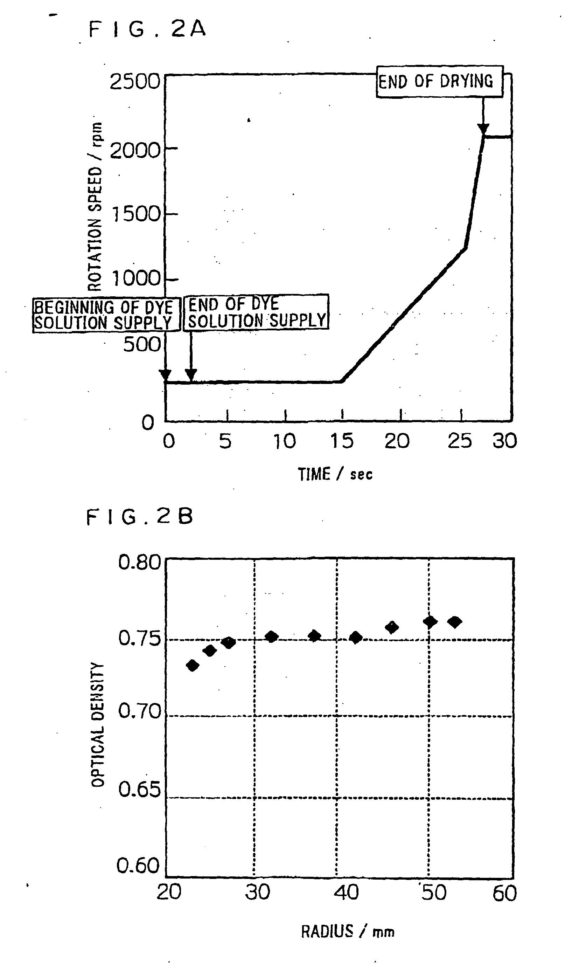

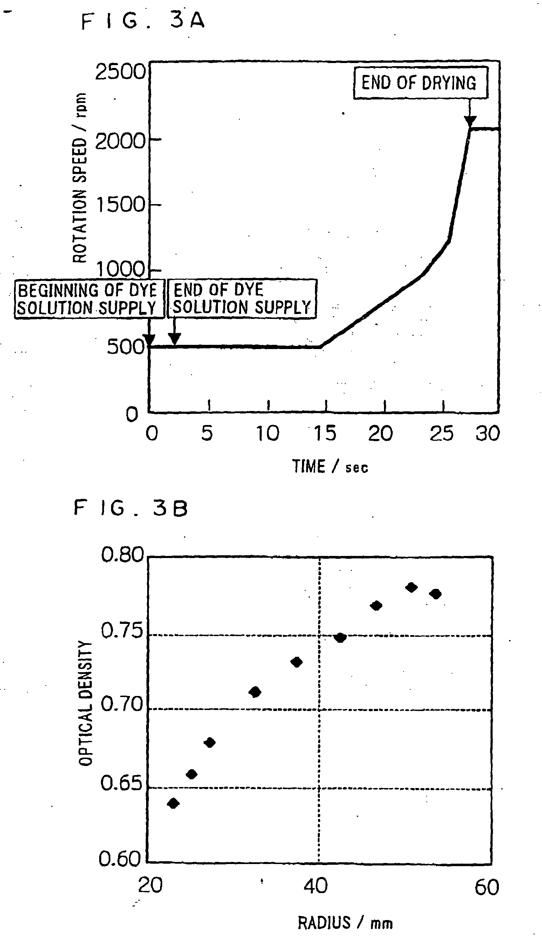

The optical recording media of Example 4 and Comparative Examples 5 and 6 were evaluated for the thickness of their dye recording layers through determination of an optical density calculated from a transmittance obtained when light having a wavelength of 580 nm was passed therethrough. (The thickness of the dye recording layer is directly proportional to the optical density.) As a result, in Example 4 the thickness of the dye recording layer was uniform from the inner periphery to the outer periphery as shown in Fig. 1B. In Comparative Examples 5 and 6 the closer to the inner periphery, the thinner the dye recording layers as shown in Figs. 2B and 3B. In particular, in Comparative Example 6 there was a noticeable difference in layer thickness between the inner periphery side and the outer periphery side.

### (Evaluation 2)

Each of the optical recording media of Example 4 and Comparative Examples 5 and 6 was subjected to recording at radii of 24 mm, 40 mm and 55mm with a disc drive (DDU1000 manufactured by Pulstec Industrial Co., Ltd.) and was checked for its recording characteristics: reflectance, degree of modulation and jitter. The results are shown in Table 2.

**Table 2**

| | Reflectance (%) | | | Degree of Modulation | | | Jitter (%) | | |
|---|---|---|---|---|---|---|---|---|---|
| | Radius of 24 mm | Radius of 40 mm | Radius of 55 mm | Radius of 24 mm | Radius of 40 mm | Radius of 55 mm | Radius of 24 mm | Radius of 40 mm | Radius of 55 mm |
| Example 4 | 47 | 46 | 46 | 0.61 | 0.62 | 0.62 | 7.8 | 7.5 | 7.6 |
| Comparative example 5 | 48 | 46 | 45 | 0.57 | 0.61 | 0.61 | 8.2 | 7.4 | 7.5 |
| Comparative example 6 | 50 | 47 | 45 | 0.50 | 0.61 | 0.64 | 9.2 | 7.5 | 7.8 |

Table 2 shows that in Example 4 an optical recording medium can be obtained which exhibits approximately the same recording characteristics regardless of the place where they are measured. In contrast, in Comparative Examples 5 and 6, the closer to the inner periphery, the smaller the degree of modulation and the higher the jitter. This is because the dye recording layer closer to the inner periphery is thinner. In particular, in Comparative Example 6, there is a remarkable difference in recording characteristics between the inner periphery side and the outer periphery side because there is a large difference in thickness of the dye recording layer between the inner periphery side and the outer periphery side.

The invention can provide a method for producing an optical recording medium by which method an optical recording medium can be produced that is of low noise level and that has favorable recording and playback characteristics.

## Claims

1. A method for producing an optical recording medium comprising the steps of:
supplying a dye solution; and
coating the dye solution on a substrate by a spin coating method to form a dye recording layer,
wherein the substrate is rotated at a rotation speed of 400 rpm or higher during a period from the beginning of supply of the dye solution to the end of supply of the dye solution; and
drying the dye solution to form a dye recording layer,
**characterized in that** the method has, in a sequence from the beginning of the supply of the dye solution to the completion of the drying, a low-speed rotation step of rotating the substrate at a speed lower than a speed at the beginning of the supply of the dye solution or than a speed at the end of the supply of the dye solution.

2. The method of claim 1, wherein a dye is contained in the dye solution in an amount of 0.2 to 1.2% by mass.

3. The method of claim 1, wherein the low-speed rotation step starts immediately after the end of the supply of the dye solution.

4. The method of claim 1 or claim 3, wherein a dye is contained in the dye solution in an amount of 0.6% to 0.8% by mass.

5. The method of any one of claims 1, 3 and 4, wherein the rotation speed of the substrate in the low-speed rotation step is from 20 to 400 rpm lower than the speed at the beginning of the supply.

6. The method of any one of claims 1, 3, 4 and 5, wherein the duration of the low-speed rotation step is 1 to 15 seconds.

7. The method of any one of claims 1, 3, 4, 5 and 6, wherein the rotation speed of the substrate is increased to a speed of 2000 to 2500 rpm after the end of the low-speed rotation step.

## Patentansprüche

1. Verfahren zur Herstellung eines optischen Aufzeichnungsmediums, umfassend die Schritte:
Zuführen einer Farbstofflösung; und
Beschichten der Farbstofflösung auf ein Substrat durch ein Rotationsbeschichtungsverfahren, um eine Farbstoff-Aufzeichnungsschicht zu bilden,
worin das Substrat mit einer Rotationsgeschwindigkeit von 400 U/Minute oder größer während einer Zeitspanne vom Beginn des Zuführens der Farbstofflösung bis zum Ende des Zuführens der Farbstofflösung gedreht wird; und
Trocknen der Farbstofflösung, um eine Farbstoff-Aufzeichnungsschicht zu bilden,
**dadurch gekennzeichnet, dass** das Verfahren in einer Sequenz vom Beginn des Zuführens der Farbstofflösung bis zur Vollendung des Trocknens einen Niedriggeschwindigkeits-Rotationsschritt zum Rotieren des Substrats bei einer Geschwindigkeit umfasst, die niedriger ist als eine Geschwindigkeit zu Beginn des Zuführens der Farbstofflösung oder als eine Geschwindigkeit zum Ende der Zuführens der Farbstofflösung

2. Verfahren gemäß Anspruch 1, worin ein Farbstoff in der Farbstofflösung in einer Menge von 0,2 bis 1,2 Masse% enthalten ist.

3. Verfahren gemäß Anspruch 1, worin der Niedriggeschwindigkeits-Rotationsschritt unmittelbar nach dem Ende des Zuführens der Farbstofflösung beginnt.

4. Verfahren gemäß Anspruch 1 oder Anspruch 3, worin ein Farbstoff in der Farbstofflösung in einer Menge von 0,6 bis 0,8 Masse% enthalten ist.

5. Verfahren gemäß irgendeinem der Ansprüche 1, 3 und 4, worin die Rotationsgeschwindigkeit des Substrats im Niedriggeschwindigkeits-Rotationsschritt 20 bis 400 U/Minute kleiner als die Geschwindigkeit am Beginn des Zuführens ist.

6. Verfahren gemäß irgendeinem der Ansprüche 1, 3, 4 und 5, worin die Dauer des Niedriggeschwindigkeits-Rotationsschrittes 1 bis 15 Sekunden beträgt.

7. Verfahren gemäß irgendeinem der Ansprüche 1, 3, 4, 5 und 6, worin die Rotationsgeschwindigkeit des Substrats nach dem Ende des Niedriggeschwindigkeits-Rotationsschrittes auf eine Geschwindigkeit von 2.000 bis 2.500 U/Minute erhöht wird.

## Revendications

1. Procédé de production d'un support d'enregistrement optique comprenant les étapes consistant à :
apporter une solution de colorant ; et
appliquer la solution de colorant sur un substrat par un procédé de revêtement par centrifugation afin de former une couche d'enregistrement de colorant,
dans lequel le substrat tourne à une vitesse de rotation de 400 tr/min ou plus pendant une période allant du début de l'apport en solution de colorant à la fin de l'apport en solution de colorant ; et
sécher la solution de colorant afin de former une couche d'enregistrement de colorant,
**caractérisé en ce que** le procédé comporte, dans une séquence allant du début de l'apport en solution de colorant jusqu'à la fin du séchage, une étape de rotation à faible vitesse consistant à faire tourner le substrat à une vitesse inférieure à une vitesse au début de l'apport en solution de colorant ou à une vitesse à la fin de l'apport en solution de colorant.

2. Procédé selon la revendication 1, dans lequel un colorant est contenu dans la solution de colorant en une quantité de 0,2 à 1,2 % en masse.

3. Procédé selon la revendication 1, dans lequel l'étape de rotation à faible vitesse commence juste après la fin de l'apport en solution de colorant.

4. Procédé selon la revendication 1 ou la revendication 3, dans lequel un colorant est contenu dans la solution de colorant en une quantité de 0,6 % à 0,8 % en masse.

5. Procédé selon l'une quelconque des revendications 1, 3 et 4, dans lequel la vitesse de rotation du substrat à l'étape de rotation à faible vitesse est de 20 à 400 tr/min inférieure à la vitesse au début de l'apport.

6. Procédé selon l'une quelconque des revendications 1, 3, 4 et 5, dans lequel la durée de l'étape de rotation à faible vitesse est de 1 à 15 secondes.

7. Procédé selon l'une quelconque des revendications 1, 3, 4, 5 et 6, dans lequel la vitesse de rotation du substrat augmente à une vitesse de 2 000 à 2 500 tr/min après la fin de l'étape de rotation à faible vitesse.
